# EUROPEAN PATENT SPECIFICATION

(11) **EP 2 102 297 B1**
(45) Date of publication and mention of the grant of the patent: **10.11.2010**
(21) Application number: 08705576.0
(22) Date of filing: 11.01.2008
(51) Int. Cl.: C09D 175/04

(54) **ADHERENT COATING COMPOSITIONS FOR RESINOUS SUBSTRATES**
HAFTBESCHICHTUNGSZUSAMMENSETZUNGEN FÜR HARZIGE SUBSTRATE
COMPOSITIONS DE REVÊTEMENT ADHÉRENT POUR SUBSTRATS RÉSINEUX

(30) Priority: 12.01.2007 US 880141 P
(43) Date of publication of application: 23.09.2009
(73) Proprietor: E. I. Du Pont de Nemours and Company, Wilmington, DE 19898 (US)
(72) Inventor: CORCORAN, Patrick, Henry, Cherry Hill, New Jersey 08003 (US)
(74) Representative: DuPont Performance Coatings Biering/Blum/Kimpel
(86) International application number: PCT/US2008/000446
(87) International publication number: WO 2008/088770

(56) References cited:
- WO-A-2007/050213
- US-A- 6 001 469
- US-B1- 6 203 913

## Description

### Field of Invention

The present invention is directed to coating compositions applied over resinous untreated substrates and more particularly directed to coating compositions that adhere to the resinous substrates without the need to prepare the substrate surfaces before the application of the composition.

### Background of Invention

Resinous materials, such as thermoplastic olefins (TPO), sheet molding compounds (SMC), engineering polymers, such as NORYL^{®} GTX polyamide (PA) reinforced with a modified polyphenylene ether polymer (PPE) supplied by GE Company, Fairfield, Connecticut, and reaction injection molded (RIM) polyurethane are used in many applications, such as automobile parts and accessories, containers, household appliances and other commercial items. It is often desirable to coat articles made from such resinous materials with coatings that are esthetically pleasing. Coatings are also used to protect such articles from degradation when exposed to atmospheric weathering conditions, such as sunlight, moisture, heat and cold. To produce longer lasting and more durable articles from resinous materials, it is necessary for the coatings to tightly adhere to the surface of such articles.

Resinous substrates made from a variety of thermoplastic and thermosetting resinous materials have widely varying surface properties, including surface tension, roughness, flexibility, and have widely varying bulk properties such as solubility parameter, which make it difficult to achieve adequate adhesion of the coatings to such materials, particularly upon aging or environmental exposure of the resinous materials. It is well known to apply an adhesion promoter or tie coat on a resinous substrate surface to improve adherence of the coating to the surface. The application of an adhesion promoter or tie coat is normally an added step in the coating process. The adhesion promoter is usually applied in a thin layer, normally about 6.35 micrometers (0.25 mils). Typically, adhesion promoters used on TPO plastic surfaces contain chlorinated polyolefins, some examples of which are described in US 4,997,882; 5,319,032 and 5,397,602. Additionally, flame or corona pretreatment steps can be also used to facilitate adequate adhesion of organic coatings to some resinous substrates.

The use of adhesion promoters and/or corona pretreatments in a coating system used to coat resinous substrates, adds complexity and cost to the system. The application of an adhesion promoter usually entails coating the resinous substrate with the promoter, followed by some drying or curing time which increases the time of the entire coating process and will usually necessitate additional workspace. Accordingly, coating compositions which exhibit excellent adhesion directly to resinous materials, such as TPO and NORYL^{®} GTX polyamide without the use of adhesion promoters or tie coats are desirable.

US 6,146,706 to PPG discloses a method of applying a coating composition to a plastic substrate wherein the coating composition comprises greater than 5 weight percent of a telechelic poyol, a crosslinking material, and a polymeric film-forming resin. Polyisocyanates can be used as the crosslinking material provided that they are used at an NCO:OH ratio of greater than 0.8:1. As polyisocyanates are known to be toxic, there is a continuing need to produce coatings that use less polyisocyanates. It has been surprisingly found that a coating composition using an unusually low NCO:OH ratio provides a coating composition that provides adhesion to a resinous substrate while still retaining good properties.

### Statement of Invention

In one embodiment of the invention is disclosed a coating composition comprising
i) a crosslinkable component comprising a crosslinkable polymer having a hydroxyl number from 2 to 200;
ii) a saturated hydrocarbon polymer; and
iii) a crosslinking component comprising a polyisocyanate having 2 to 10 isocyanate groups per polymer chain;
wherein the ratio of said isocyanate groups to said hydroxy functional groups in the coating composition ranges from to 0.1/1 to 0.75/1 and wherein the coating composition comprises in the range of from 0.5 weight percent to 4.75 percent by weight of the saturated hydrocarbon polymer, said weight percentages being based on the total weight of said crosslinkable component, said saturated hydrocarbon polymer and said crosslinking component.

Another embodiment of the invention discloses a process of producing an adherent coating on a resinous substrate comprising;
i) applying a layer of the coating composition on said resinous substrate; wherein said coating composition comprises
   a) a crosslinkable component comprising a crosslinkable polymer having a hydroxyl number from 2 to 200;
   b) a saturated hydrocarbon polymer; and
   c) a crosslinking component comprising a polyisocyanate having on average 2 to 10 isocyanate groups per polymer chain; and
2. curing said layer to produce said adherent coating on said resinous substrate;
wherein the ratio of said isocyanate groups to said hydroxy functional groups in the coating composition ranges from to 0.1/1 to 0.75/1 and wherein the coating composition comprises in the range of from 0.5 weight percent to 4.75 percent by weight of the saturated hydrocarbon polymer, said weight percentages being based on the total weight of said crosslinkable component, said saturated hydrocarbon polymer and said crosslinking component.

### Detailed Description of the Invention

### Unless stated otherwise:

"Low VOC coating composition" means a coating composition that includes in the range of from 0.36 kilograms (0.8 pounds per gallon) to 2.95 kilograms (6.5 pounds per gallon), preferably from 1.18 kilograms (2.6 pounds per gallon) to 2.27 kilograms (5.0 pounds per gallon) and more preferably from 1.27 kilograms (2.8 pounds per gallon) to 2.00 kilograms (4.4 pounds per gallon) of the solvent per liter of the coating composition. All VOC's determined under the procedure provided in ASTM D3960.

"GPC number average molecular weight" means a number average molecular weight measured by utilizing gel permeation chromatography, such as high performance liquid chromatograph (HPLC) supplied by Hewlett-Packard, Palo Alto, California. Unless stated otherwise, tetrahydrofuran was used as the liquid phase and polystyrene standards were used.

"Tg" (glass transition temperature) means a temperature measured in °C determined by DSC (Differential Scanning Calorimetry) at a rate of heating of 10°C per minute, with Tg taken at the first inflection point. The Tg of a polymer is a measure of the hardness and melt flow of the polymer. The higher the Tg, the less the melt flow and the harder the coating. Tg is described in Principles of Polymer Chemistry (1953), Cornell University Press. The Tg can be actually measured or it can be calculated as described by Fox in Bull. Amer. Physics Soc., 1, 3, page 123 (1956). Tg, as used herein, refers to actually measured values.

"(Meth)acrylate" means acrylate and methacrylate.

"Polymer solids" or "composition solids" means a polymer or composition in its dry state.

"Crosslinkable component" means a component that includes a compound, polymer, copolymer or a polydisperse mixture of compounds, polymers and/or copolymers all having functional groups positioned in the backbone, pendant from the polymer backbone, terminally positioned on the polymer backbone; or a combination thereof.

"Crosslinking component" is a component that includes a compound, polymer, copolymer or a polydisperse mixture of compounds, polymers, and/or copolymers all having functional groups positioned in the backbone, pendant from the polymer backbone, terminally positioned on the polymer or oligomer backbone; or a combination thereof, wherein these functional groups are capable of crosslinking with the functional groups on the crosslinkable component (during the curing step) to produce a coating in the form of crosslinked structures.

"Ambient cure condition" is generally defined as the temperature range of 12°C to 45°C (54°F to 113°F) and a humidity range of 5% to 95% that is present in the spraying area.

"Untreated resinous substrate" means a thermoplastic or thermosetting substrate that has not been pretreated using any means to increase the adhesion of a subsequent coating applied over the substrate. Such treatment methods are well known in the art, such as flame or corona treatments or treating the resinous surface with an adhesion promoter or tie coat to help increase adhesion to the coating composition. A typically used conventional adhesion promoter contains a chlorinated polyolefin. Each of these adhesion-promoting methods increases the complexity and cost of coating such substrates.

"Treated resinous substrate" means a thermoplastic or thermosetting substrate that has been pretreated to increase the adhesion of a subsequent coating applied over the substrate as described above.

The resinous substrates suitable for use in the present invention can include any of the thermoplastic or thermosetting synthetic materials commonly used in injection molding, sheet molding, blow molding, vacuum forming or other similar process in which parts are formed. Some of the more suitable resinous substrate include polyolefins such as those made from polyethylene, polypropylene, polybutylene, isotactic polypropylene reinforced with a polyethylene-alpha olefin copolymer; polyamides and polyamides reinforced with a polyphenyleneether, sheet molding compound or a copolymer of acrylonitrile, butadiene and styrene (ABS). However, reaction injection molding compounds (RIMs) are not part of this invention unless they have been reinforced (RRIMs) with conventional reinforcing agents, such as short glass fibers or mineral fillers (mica, wollastonite and others). One example of suitable RRIM is known as BAYFLEX^{®} 190 polyurethane/polyurea RRIM system (reinforced with 15% mica) from Bayer MaterialScience, Pittsburgh, Pennsylvania.

"Two-pack coating composition" means a curable coating composition having two components stored in separate containers. The containers containing the two components are typically sealed to increase the shelf life of the components of the coating composition. One component of the two-pack coating composition is a crosslinkable component and the other is a crosslinking component. These components are mixed prior to use to form a pot mix. The pot life of a pot mix is limited, typically to a few minutes (10 minutes to 45 minutes) to a few hours (4 hours to 24 hours). The crosslinking component of this composition includes polyisocyanates. The pot mix is applied as a layer of a desired thickness on a substrate surface, such as an auto body. After application, the layer dries and cures at ambient or elevated temperatures to form a coating on the substrate surface having desired coating properties, such as improved adhesion and chip resistance.

"One-pack coating composition" means a curable coating composition having both the crosslinkable component and the crosslinking component stored together in one pack. The crosslinking component of this composition is selected from the group consisting of blocked polyisocyanates, melamines and mixtures thereof. Typical blocking agents for polyisocyanates include alcohols, ketimines, and oximes. One-pack coating compositions are applied to a suitable substrate and are cured at elevated temperatures to form a durable coating. Since the coating composition of the present invention is directed to a composition that adheres to plastic substrates, the curing temperature should be below that of the softening point of the substrate when formulating and curing a one-pack coating composition. A two-pack coating composition is preferred.

The use of numerical values in the various ranges specified herein is stated as approximations as though the minimum and maximum values within the stated ranges were both being preceded by the word "about." In this manner slight variations above and below the stated ranges can be used to achieve substantially the same results as values within the ranges. Also, the disclosure of these ranges is intended as a continuous range including every value between the minimum and maximum average values including fractional values that can result when some of components of one value are mixed with those of different value. Moreover, when broader and narrower ranges are disclosed, it is within the contemplation of this invention to match a minimum value from one range with a maximum value from another range and vice versa.

The novel coating compositions of the present invention are suitable for use as a primer applied directly to a resinous substrate, a colored topcoat applied directly to a resinous substrate, a colored basecoat applied directly to a resinous substrate that is subsequently top coated with a clear topcoat in a basecoat-clear coat coated composite, or a clear topcoat applied directly to a colored resinous substrate.

As used herein, a "predominantly hydrocarbon polymer", means a saturated hydrocarbon polymer containing about 85 to about 99 weight percent of hydrocarbon units. The saturated hydrocarbon polymer contains less than about 13 percent by weight of heteroatoms, such as oxygen, nitrogen and sulfur. Preferably, the saturated hydrocarbon polymer contains less than 6 percent by weight of heteroatoms, more preferably less than 3 percent, and most preferably less than 1 percent. Typically, the number average molecular weight of the saturated hydrocarbon polymer ranges from about 1000 to 20,000.

The saturated hydrocarbon polymer contains an average of more than one terminal or pendant functional group per molecule, which is capable of reacting with the crosslinking material of the crosslinkable film-forming system. Preferably, the saturated hydrocarbon polymer, which can be present as a mixture of different saturated hydrocarbon polymers, contains an average of about 1.5 to about 6 terminal or pendent functional groups per molecule. More preferably, the saturated hydrocarbon polymer contains two terminal functional groups per molecule.

The functional groups of the saturated hydrocarbon polymer can be carboxyl groups, carbamate groups, hydroxyl groups, amino groups, amide groups, mercaptan groups and mixtures thereof. Preferably, the functional groups are hydroxyl groups. More preferably, the saturated hydrocarbon polymer contains two terminal hydroxyl groups.

The saturated hydrocarbon polymer is at least "substantially saturated", i.e., the hydrocarbon polymer has been hydrogenated, usually after polymerization, such that at least about 90 percent and preferably at least about 95 percent of the carbon to carbon double bonds of the hydrocarbon polymer are saturated. Methods for hydrogenating unsaturated hydrocarbon polymers are well known to those skilled in the art. Examples of useful hydrogenation processes include hydrogenation in the presence of catalysts, such as Raney Nickel; noble metals, such as platinum; soluble transition metal catalysts; and titanium catalysts disclosed in US 5,039,755.

In a preferred embodiment, the saturated hydrocarbon polymer comprises one or more substantially saturated polyhydroxylated polydiene polymers. Polyhydroxylated polydiene polymers made using isoprene or butadiene, as described in US 5,486,570 and US 5,376,745, which are substantially saturated, are suitable for use in the present invention. Preferably the saturated hydrocarbon polymer is formed from saturated polybutadiene. Polyhydroxylated polydiene polymers of this type generally have a hydroxyl equivalent weight of between about 500 and about 20,000. Preferably, the saturated polyhydroxylated polydiene polymer is a dihydroxy polybutadiene which contains about two terminal hydroxyl groups, one at each end of the polymer, and has a hydroxyl equivalent weight of about 1,000 to about 5000.

Suitable substantially saturated polyhydroxylated polydiene polymers include those synthesized by free radical polymerization of dienes or anionic polymerization of conjugated diene hydrocarbons, such as butadiene or isoprene, with lithium initiators. The process steps for preparing polyhydroxylated polydiene polymers by anionic polymerization are described in U.S. Pat. No. 4,039,593; Re. 27,145; and U.S. Pat. No. 5,376,745. Such polymers are typically made with a di-lithium initiator, such as a compound formed by reaction of two moles of sec-butyl lithium with one mole of diisopropylbenzene. The polymerization of butadiene can be performed in a solvent composed of 90 percent by weight cyclohexane and 10 percent by weight diethyl ether. The molar ratio of diinitiator to monomer determines the molecular weight of the polymer. The polymer is capped with two moles of ethylene oxide and terminated with two moles of methanol to produce the dihydroxy polybutadiene. The most preferred saturated hydrocarbon polymer is a telechelic diol. Suitable telechelic diols include KRATON^{®} liquid polymers HPVM 2200 series and Shell Diol L-2203, which are commercially available from Shell Chemical Co, Houston, Texas and KRASOL^{®} HLBH-P 3000 polybutadiene from Sartomer Resins, West Chester, Pennsylvania.

Other suitable substantially saturated polyhydroxylated polydiene polymers preferably have at least about 90 weight percent repeat units derived from conjugated dienes. The monomers used to form the polymers include olefins having from 2 to 6 carbon atoms such as are disclosed in US 4,518,753 and US 3,652,732. Optionally the polyhydroxylated polydiene polymers can be formed from up to 50 mole percent of ethylenically unsaturated comonomers having from 2 to 10 carbon atoms and substituents including aromatics, halogens, cyanides, esters, and hydroxy esters. Examples of such polymers are hydroxyl terminated diene-based polymers including anionically polymerized dienes, which are given hydroxyl groups in the chain termination step, or free radically polymerized dienes such as those initiated with hydrogen peroxide. Such hydrogenated substantially saturated polyhydroxylated polydiene polymers are described in US 5,115,007 and US 5,221,707. These polymers preferably have a Mn ranging from about 500 to about 20,000 and more preferably about 1,000 to about 8,000 grams per mole and have from 2 to 6 and more preferably from 2 to 4 hydroxyl end groups per polymer chain.

Preferably, the coating composition is essentially free of monohydroxylated diene polymers, i.e., the saturated hydrocarbon polymer contains less than 25 weight percent of monohydroxylated diene polymers, preferably less than 10 weight percent and most preferably the coating composition is less than 1.0 weight percent of monohydroxylated diene polymers.

The disclosed coating composition comprises a crosslinkable component, a saturated hydrocarbon polymer, and a crosslinking component. The saturated hydrocarbon polymer, preferably a telechelic diol is present in the coating composition in the range of from 0.5 percent by weight to 4.75 percent by weight, preferably, 0.6 percent by weight to 4.7 percent by weight, more preferably from 1.0 percent by weight to 4.65 percent by weight. All weight percentages are based upon the total amount of the crosslinkable component, the crosslinking component and the telechelic diol.

The disclosed coating composition comprises a crosslinkable component, a saturated hydrocarbon polymer, and a crosslinking component. The crosslinkable component is selected from the group consisting of acrylic polyol, polyester polyol, and a combination thereof.

The crosslinkable component is selected from the group consisting of acrylic polyol, polyester polyol, and a combination thereof. The crosslinkable component is present in an amount in the range of from 20 to 80 percent by weight, preferably in the range of from 30 to 70 percent by weight, more preferably in the range of from 40 to 60 percent by weight, all percentages are based on the total amount of the crosslinkable component, the crosslinking component and the telechelic diol.

Suitable acrylic polyols can have a GPC number average molecular weight in the range of from 2,000 to 20,000 preferably 2,200 to 8,000 and more preferably 2,500 to 6,000, and can have a Tg in the range of from - 40°C to +70°C, preferably -30°C to +50°C and more preferably -20°C to 30°C. The acrylic polyols have a hydroxyl number in the range of from 2 to 150, more preferably in the range of from 3 to 125, most preferably in the range of from 5 to 100.

The acrylic polyol is produced by the polymerization of a monomer mixture comprising one or more ethylenically unsaturated monomers. Some of the suitable ethylenically unsaturated monomers include acrylic ester monomers, such as hydroxy alkyl (meth)acrylates wherein alkyl group includes 1 to 4 carbon atoms. Some examples of hydroxy alkyl (meth)acrylates include hydroxyethyl (meth)acrylate (primary), hydroxybutyl (meth)acrylate (all isomers, primary and secondary) and hydroxypropyl (meth)acrylate (all isomers, primary and secondary). The monomer mixture can further include the following ethylenically unsaturated monomers which include acrylic ester monomers, such as methyl (meth)acrylate, ethyl (meth)acrylate, butyl (meth)acrylate, cyclohexyl(meth)acrylate, 2-ethylhexyl (meth)acrylate, decyl (meth)acrylate, lauryl (meth)acrylate, isobornyl (meth)acrylate, isodecyl (meth)acrylate, oleyl (meth)acrylate, palmityl (meth)acrylate, stearyl (meth)acrylate, and acetoacetoxy ethyl (meth)acrylate; acrylamide or substituted acrylamides; styrene or alkyl substituted styrenes; butadiene; ethylene; vinyl acetate; vinyl ester of "Versatic" acid (a tertiary monocarboxylic acid having C₉, C₁₀ and C₁₁ chain length); vinyl monomers, such as, for example, vinyl chloride, vinylidene chloride, vinyl pyridine, N-vinyl pyrrolidone; amino monomers, such as, for example, N,N'-dimethylamino (meth)acrylate; chloroprene and acrylonitrile or methacrylonitrile; carboxyl monomers, such as acrylic acid, methacrylic acid, crotonic acid, itaconic acid, fumaric acid, maleic acid, monomethyl itaconate, monomethyl fumarate, monobutyl fumarate, maleic anhydride, 2-acrylamido-2-methyl-1-propanesulfonic acid, sodium vinyl sulfonate, and phosphoethyl methacrylate.

One preferred acrylic polyol is polymerized from a monomer mixture of about 10 to 30% by weight cyclohexyl (meth)acrylate, 10 to 70% by weight ethylhexyl (meth)acrylate, 5 to 25% by weight hydroxyethyl (meth)acrylate, and optionally up to 30% by weight styrene, and up to 30% by weight methyl methacrylate, all weight percentages based on the total weight of the acrylic polyol.

Suitable polyester polyols can have a GPC number average molecular weight in the range of from 2,000 to 20,000, preferably 2,200 to 8,000 and more preferably 2,500 to 6,000 and can have a Tg in the range of from -40°C to +40°C, preferably -30°C to +30°C and more preferably - 20°C to 20°C. The polyester polyols have a hydroxyl number in the range of from 2 to 200, more preferably in the range of from 2 to 175, most preferably in the range of from 5 to 150.

The polyester polyol is produced from the polycondensation of at least one polyol with at least one polycarboxylic acid or anhydride.

Suitable polyols include ethylene glycol, propanediols, butanediols, hexanediols, neopentylglycol, diethylene glycol, cyclohexanediol, cyclohexanedimethanol, trimethylpentanediol, ethyl butylpropanediol, ditrimethylolpropane, trimethylolethane, trimethylolpropane, glycerol, pentaerythritol, dipentaerythritol, glycerol; polyalkylene glycols such as, polyethylene glycol and polypropylene glycol, and PRIPOL^{®} dimer diols, available from Uniqema Chemicals, Wilmington, Delaware.

Suitable polycarboxylic acids and/or anhydrides that can be used are aliphatic dicarboxylic acids such as maleic acid, maleic anhydride, adipic acid and sebacic acid, 1,4-cyclohexanedicarboxylic acid, hexahydrophthalic acid, hexahydrophthalic anhydride, methyl-hexahydrophthalic acid, methyl-hexahydrophthalic anhydride, azelaic acid and 1,12-dodecanedioc acid; aromatic dicarboxylic acids and anhydrides such as phthalic acid, phthalic anhydride, isophthalic acid, terephthalic acid, PRIPOL^{®} dimer acids, available from Uniqema Chemicals, Wilmington, Delaware, or a combination thereof.

One preferred polyester is produced from a mixture of about 10 to 15 percent by weight cyclohexyl dimethanol, 30 to 35 percent by weight PRIPOL^{®} dimer diol, 5 to 10 percent by weight trimethylol propane, 10 to 15 percent by weight (methyl)hexahydrophthalic anhydride, and 30 to 40 percent by weight PRIPOL^{®} dimer acid.

Where a combination of an acrylic polyol and a polyester polyol is used, the acrylic polyol can be used in the range of from 1 percent by weight to 99 percent by weight based upon the total weight of the acrylic polyol and the polyester polyol. The polyester polyol can be used in the range of from 1 percent by weight to 99 percent by weight based upon the total weight of the acrylic polyol and the polyester polyol.

The disclosed coating composition comprises a crosslinkable component, a saturated hydrocarbon polymer, and a crosslinking component. The preferred crosslinking component is a polyisocyanate, more preferably, a cycloaliphatic polyisocyanate.

Cycloaliphatic polyisocyanates are preferred for use in the present invention and are of the formula:

R¹-(R²-NCO)ₙ

wherein R¹ is a cycloaliphatic group which can be optionally bridged. R¹ contains 3 to 20, preferably 4 to 10 and more preferably 5 to 8 carbon atoms in the ring. R² is independently chosen from a direct bond or a straight or branched aliphatic group having from 1 to 6 carbon atoms, preferably 1 to 4 and more preferably 1 to 2 and wherein n ranges from 2 to 10, preferably from 2 to 8 and more preferably from 2 to 5. The preferred isocyanate is chosen from the monomeric form of the isocyanate or the so-called 'homopolymer isocyanates' resulting from the isocyanates being dimerized, trimerized, or other wise oligomerized via known methods. One such preferred example is the isocyanaurate trimer of isophorone diisocyanate available from Bayer Material Science, Pittsburgh, PA under the trade mark Desmodur^{®} Z4470 polyisocyanate.

Some of examples of suitable cycloaliphatic polyisocyanates include di-, tri- or tetraisocyanates which may or may not be ethylenically unsaturated, such as, 1,3-cyclopentane diisocyanate, 1,2-cyclohexane diisocyanate, 1,4-cyclohexane diisocyanate, isophorone diisocyanate, 4-methyl-1,3-diisocyanatocyclohexane, dicyclohexylmethane-4,4'-diisocyanate, 3,3'-dimethyl-dicyclohexylmethane-4,4'-diisocyanate, polyisocyanates having isocyanurate structural units, the adduct of 2 molecules of a diisocyanate, such as isophorone diisocyanate, and a diol such as ethylene glycol, the adduct of 1 molecule of trimethylol propane and 3 molecules of isophorone diisocyanate.

If desired, the crosslinking component can include other polyisocyanates, such as 1,2-propylene diisocyanate, trimethylene diisocyanate, tetramethylene diisocyanate, 2,3-butylene diisocyanate, hexamethylene diisocyanate, octamethylene diisocyanate, 2,2,4-trimethyl hexamethylene diisocyanate, 2,4,4-trimethyl hexamethylene diisocyanate, dodecamethylene diisocyanate, omega, omega-dipropyl ether diisocyanate, trans-vinylidene diisocyanate, toluene diisocyanate, 1,3-bis(1-isocyanato 1-methylethyl)benzene, 1,4-bis(1-isocyanato-1-methylethyl)benzene, 1,3-bis(isocyanatomethyl)benzenexylene diisocyanate, 1,5-dimethyl-2,4-bis(isocyanatomethyl)benzene, 1,5-dimethyl-2,4-bis(2-isocyanatoethyl)benzene, 1,3,5-triethyl-2,4-bis(isocyanatomethyl)benzene, 4,4'-diisocyanatodiphenyl, 3,3'-dichloro-4,4'-diisocyanatodiphenyl, 3,3'-diphenyl4,4'-diisocyanatodiphenyl, 3,3'-dimethoxy-4,4'-diisocyanatodiphenyl, 4,4'-diisocyanatodiphenylmethane, 3,3'-dimethyl-4,4'-diisocyanatodiphenyl methane, diisocyanatonaphthalene, and combination thereof. It is desired to use less than 50 percent by weight of these non-cycloaliphatic polyisocyanates based on the total weight of the polyisocyanates in the crosslinking component.

Preferably, the crosslinking component can include small amount of other polyisocyanates, such as one or more trimers of hexamethylene diisocyanate, meta-tetramethylxylylene diisocyanate, toluene diisocyanate, or a combination thereof.

When the aforedescribed polyisocyanates are used, the crosslinkable component is stored separately from the crosslinking component as part of a two-pack coating composition, wherein these components are mixed prior to use to form a pot mix, which is then applied by conventional means such as spraying devices or roller applicators over the resinous substrates.

Alternatively, the isocyanates groups on the aforedescribed polyisocyanates can be blocked with a monomeric alcohol to prevent premature crosslinking in a one-pack coating composition. Some of the suitable monomeric alcohols include methanol, ethanol, propanol, butanol, isopropanol, isobutanol, hexanol, 2-ethylhexanol and cyclohexanol. The preferred monomeric alcohols are 2-ethylhexanol and cyclohexanol.

The crosslinking component is used in an amount such that the ratio of isocyanate groups in the polyisocyanate to the hydroxyl groups in the crosslinkable and saturated hydrocarbon polymer is preferably in the range of from 0.1:1 to 0.75:1, more preferably in the range of from 0.2:1 to 0.7:1, and most preferably in the range of from 0.3:1 to 0.6:1. If the ratio is less than 0.1:1 then the coating does not cure to a sufficient hardness to be a suitable coating.

The coating composition typically includes one or more solvents such as organic solvent selected from aromatic hydrocarbons, such as petroleum naphtha or xylenes; ketones, such as, methyl amyl ketone, methyl isobutyl ketone, methyl ethyl ketone or acetone; esters, such as, butyl acetate or hexyl acetate; glycol ether esters, such as propylene glycol monomethyl ether acetate; and combination thereof. The composition generally includes in the range of 10 percent to 85 percent, preferably 20 percent to 60 percent, more preferably 30 percent to 40 percent of the aforedescribed solvents, all the percentages being in weight percent based on the total weight of the coating composition. The solvent or a mixture of solvents is typically included in the crosslinking and crosslinkable components. Preferably, the solvent is selected or the mixture of solvents is adjusted to render the crosslinkable copolymer miscible in it.

The coating composition of the present invention can be used as a primer composition, a basecoat composition or a clearcoat composition for a resinous substrate. Typically, the resinous substrate is cleaned prior to application of a layer of a coating composition. The cleaning solution can be a solvent or a combination of solvents and it can optionally include in the range of from 0.5 percent by weight to 10 percent by weight of a telechelic diol to aid adhesion to the substrate. The coating composition of the present invention is preferably used as a primer coating composition which is applied to a resinous substrate. The applied layer of coating composition is optionally, but preferably dried and at least partially cured. A layer of basecoat composition can then be applied, followed by an optional layer of clearcoat composition. The applied layer of basecoat composition and clearcoat composition can be dried and at least partially cured simultaneously, or they can be dried and at least partially cured after each application. The applied basecoat can be a crosslinking type basecoat comprising a crosslinkable component and a crosslinking component or, it can be a lacquer coating composition that does not require a crosslinking component. Selection of the clearcoat composition is not particularly limited.

The coating composition of the present invention can also contain conventional additives, such as pigments, pigment dispersants, stabilizers, rheology control agents, flow agents, toughening agents and fillers. Selection of such additional additives would, obviously, depend on the intended use of the coating composition. The foregoing additives may be added to either the crosslinkable or crosslinking component, or both, depending upon the intended use of the coating composition. When the present coating composition is used as a basecoat, typical pigments that can be added to the composition include the following: metallic oxides, such as titanium dioxide, zinc oxide, iron oxides of various colors, carbon black; filler pigments, such as talc, china clay, barytes, carbonates, silicates; and a wide variety of organic colored pigments, such as quinacridones, copper phthalocyanines, perylenes, azo pigments, indanthrone blues, carbazoles, such as carbazole violet, isoindolinones, isoindolones, thioindigo reds, benzimidazolinones; metallic flake pigments, such as aluminum flakes.

In addition to the foregoing, to improve weatherability of a clearcoat or pigmented topcoat of the coating composition, the coating composition when formulated as a clear composition can include about 0.1 percent to 5 percent by weight, based on the weight of the composition solids, of an ultraviolet light stabilizer or a combination of ultraviolet light stabilizers and absorbers may be added. These stabilizers include ultraviolet light absorbers, screeners, quenchers and specific hindered amine light stabilizers. Also, about 0.1 percent to 5 percent by weight, based on the weight of the composition solids, of an antioxidant can be added. Most of the foregoing stabilizers are supplied by Ciba Specialty Chemicals, Tarrytown, New York.

In use, when the coating composition is packed as a two pack coating composition, the crosslinkable and crosslinking components of the coating composition are mixed just prior to use to form a pot mix, which has limited pot life typically ranging from 10 minutes to 24 hours. A pot mix layer is typically applied to a substrate by conventional techniques, such as spraying, electrostatic spraying, roller coating, dipping or brushing. The pot mix layer then cures under ambient conditions in the range of 10 minutes to 24 hours, preferably in the range of 60 minutes to 16 hours or overnight to form a coating on the substrate having the desired coating properties. It is understood that the actual curing time depends upon the thickness of the applied layer, the type of crosslinking chemistry being used and on the presence or absence of any suitable drying devices, such as fans that assist in continuously flowing air over the coated substrate to accelerate the dry rate. If desired, baking the coated substrate at a temperature of about 60 to 100°C for about 30 minutes may further accelerate the cure rate. The foregoing baking step is particularly useful under OEM (Original Equipment Manufacture) conditions.

When the coating composition is packaged as a one-pack composition, a layer of the coating composition is applied in a manner similar to that described earlier. However, since the crosslinking groups in the crosslinking components are blocked, the layer is typically subjected to bake cure temperatures to unblock the crosslinking groups so that they can crosslink with the crosslinkable groups presented in the crosslinkable component. Typically baking step takes place at baking temperatures ranging from 60°C to 200°C, preferably ranging from 80°C to 160°C, for about 10 to 60 minutes.

The present invention is directed to a method of producing a multi-coat system, preferably a multi coat OEM or refinish system that includes the coating composition of the present invention. The coating composition may be used as a primer coat, a basecoat in a basecoat/clearcoat system, a clearcoat in a basecoat/clearcoat system, or in a topcoat in a single coat or multi-coat system. Each of these systems is well known in the art.

The suitable substrates for applying the coating composition of the present invention include resinous automobile bodies, body part, body inserts or body panels, any and all resinous items manufactured and painted by automobile sub-suppliers, commercial resinous truck bodies, including but not limited to beverage transport truck bodies, utility bodies, ready mix concrete delivery vehicle bodies, waste hauling vehicle bodies, and fire and emergency vehicle bodies, as well as any potential resinous attachments or components to such truck bodies, buses, farm and construction equipment, truck caps and covers, commercial trailers, consumer trailers, recreational vehicles, including but not limited to, motor homes, campers, conversion vans, vans, pleasure vehicles, pleasure craft snow mobiles, all terrain vehicles, personal watercraft, motorcycles, bicycles, boats, and aircraft. The resinous substrate further includes those used in industrial and commercial new construction and maintenance thereof; amusement park equipment; railroad cars; machinery; OEM tools; signage; fiberglass structures; toys; sporting goods; golf balls; and sporting equipment.

### EXAMPLES

### Test procedures

X-Hatch adhesion - Using a sharp razor blade, scalpel, knife or other cutting device, two cuts are made into the coating with a 30 - 45 degree angle between legs and down to the substrate which intersects to form an "X". A steel or other hard metal straightedge is used to ensure straight cuts. Tape is placed on the center of the intersection of the cuts and then removed rapidly. The X-cut area is then inspected for removal of coating from the substrate or previous coating and rated. A standard method for the application and performance of this test is given as ASTM D6677. For the purposes of this invention, the adhesion is rated on a sliding scale, which ranges from 0 (no adhesion, i.e., total failure) to 10 (complete adhesion, i.e., total success). A rating of 6 and higher is preferable and a rating of 9 and higher is more preferable.

Cross Hatch adhesion - The cross hatch tape test is primarily intended for use in the laboratory on coatings less than 5 mils (125 microns) thick. It uses a cross hatch pattern rather than the X pattern. A cutting guide or a special cross hatch cutter with multiple preset blades is needed to make sure the incisions are properly spaced and parallel. After the tape has been applied and pulled off, the cut area is then inspected and rated. The foregoing test is based on a standard method for the application and performance of these adhesion tests available in ASTM D3359. For the purposes of this invention, the adhesion is rated on a sliding scale, which ranges from 0 (no adhesion, i.e., total failure) to 10 (complete adhesion, i.e., total success). A rating of 6 and higher is preferable and a rating of 9 and higher is more preferable.

KRASOL^{®} HLBH-P 3000 and KRASOL^{®} HLBH-P 2000 polybutadienes were supplied by Sartomer Resins, West Chester, Pennsylvania.

PLAS-STICK^{®} 2320 plastic cleaners were supplied by the DuPont Company, Wilmington, Delaware.

DESMODUR^{®} Z4470 polyisocyanate was supplied by Bayer MaterialScience, Pittsburgh, Pennsylvania.

Zinc catalyst is 0.05 weight percent of dibutyltindilaurate and 0.05 weight percent of zinc naphthenate.

Desmodur^{®} N3300 polyisocyanate was supplied by Bayer MaterialScience, Pittsburgh, Pennsylvania.

VAZO^{®} 67 thermal initiator was supplied by the DuPont Company, Wilmington, Delaware.

Polyolefin panels are available from ACT Laboratories, Wixom, Michigan.

AROMATIC^{®} 150 aromatic solvent blend was supplied by ExxonMobil, Houston, Texas.

LARAPOL^{®} A81 urea/aldehyde condensation product was supplied by Conservation Resources International LLC, Springfield, Virginia.

### Preparation of acrylic polyol #1

A reactor equipped with a stirrer, condenser, an addition funnel and a nitrogen blanket was charged with 36.24 grams of butyl acetate. The reactor was then heated to reflux. The addition funnel was charged with a mixture of 64.0 grams of cyclohexyl methacrylate, 16.0 grams of 2-ethylhexyl methacrylate, 20.0 grams of 2-hydroxyethyl methacrylate, 11.26 grams of ethyl acetate and 3.0 grams of VAZO^{®} 67 thermal initiator. The aforedescribed mixture was added to the reactor over a three-hour period while maintaining the reflux. When the addition was complete, the addition funnel was charged with an additional 1.0 grams of VAZO^{®} 67 thermal initiator and 16.67 grams of ethyl acetate. This mixture was added to the reactor over a one-hour period while maintaining reflux. When the aforedescribed addition was complete, the reaction was held at reflux for one hour then cooled. The solids content of solution was adjusted to 59.7% and the solution had a Gardner-Holdt viscosity of Q.

### Preparation of Acrylic polyol #2

An acrylic polyol was produced using the above procedure. The acrylic polyol was prepared using styrene, isobornyl methacrylate, 2-ethyl hexyl acrylate, 2-hydroxyethyl methacrylate, n-butyl methacrylate, and methyl methacrylate in a ratio of 10/10/15/30/10/25. The resulting polymer solution had a solids content of 65 percent and a Gardner-Holdt viscosity of Z.

### Preparation of Acrylic polyol #3

An acrylic polyol was produced using the above procedure. The acrylic polyol was prepared using styrene, isobornyl methacrylate, 2-ethyl hexyl acrylate, 2-hydroxyethyl methacrylate, and hydroxypropyl methacrylate in a ratio of 9/18/28/22.5/22.5. The resulting polymer solution had a solids content of 75 percent and a Gardner-Holdt viscosity of X.

### Preparation of Acrylic Blend A

106.81 parts of acrylic polyol #2 and 93.19 parts of acrylic polyol #3 were mixed in a mixing vessel and stored for further use.

### Preparation of polyester #1

A reactor equipped with a stirrer, condenser, an addition funnel and a nitrogen blanket was charged with 200.18 parts neopentyl glycol, 54.96 parts 1,6-hexane diol, 115.29 parts trimethylol propane, 94.58 parts isophthalic acid, 114.39 parts adipic acid, 180.24 parts dodecanedioic acid, and 63.64 parts of phthalic anhydride. The foregoing mixture was heated to 243°C and held at this temperature until the acid number was in the range of from 2 to 5. The heating source was removed and a mixture of 62 part, 74 parts of xylene, 15 parts toluene, and 77 parts of methyl ethyl ketone was added. The resulting polyester had a GPC weight average molecular weight of about 12,000, a Tg of 21 °C, and a total solids percentage of 59.7.

### Preparation of Cleaning Solution #1

99 parts of PLAS-STICK^{®} 2320 plastic cleaner was mixed with 1 part KRASOL^{®} HLBH-P 2000 in a suitable mixing vessel and stirred until a solution formed. This mixture was used as is.

### Coating Compositions A-K

The ingredients of Table 1 were mixed in the order shown in a suitable mixing vessel to form coating compositions A-K. All amounts shown are in parts by weight.

**TABLE 1**

| | Coating Composition | | | | | | | | | | |
|---|---|---|---|---|---|---|---|---|---|---|---|
| | A | B | C | D | E | F | G | H | I | J | K |
| Acrylic polyol #1 | 35.54 | 35.16 | 34.78 | 34.40 | 34.02 | 33.64 | 33.27 | 32.89 | 32.51 | 32.13 | 31.75 |
| Telechelic diol¹ | 0 | 0.31 | 0.62 | 0.93 | 1.24 | 1.55 | 1.86 | 2.17 | 2.48 | 2.79 | 3.1 |
| Dibutyl tin dilaurate | 4.96 | 4.96 | 4.96 | 4.96 | 4.96 | 4.96 | 4.96 | 4.96 | 4.96 | 4.96 | 4.96 |
| Zinc Catalyst | 1.24 | 1.24 | 1.24 | 1.24 | 1.24 | 1.24 | 1.24 | 1.24 | 1.24 | 1.24 | 1.24 |
| AROMATIC 150^{®} | 2.59 | 2.69 | 2.8 | 2.9 | 3.01 | 3.11 | 3.22 | 3.32 | 3.43 | 3.53 | 3.64 |
| DESMODUR® Z-4470 | 5.66 | 5.62 | 5.58 | 5.55 | 5.51 | 5.47 | 5.43 | 5.40 | 5.36 | 5.32 | 5.28 |
| NCO/OH ratio | 0.5/1 | 0.5/1 | 0.5/1 | 0.5/1 | 0.5/1 | 0.5/1 | 0.5/1 | 0.5/1 | 0.5/1 | 0.5/1 | 0.5/1 |

| | | | | | | | | | | | |
|---|---|---|---|---|---|---|---|---|---|---|---|
| 1. KRASOL^{®} HLBH-P 3000 polybutadiene | | | | | | | | | | | |

Thermoplastic polyolefin panels were prepared by wiping each panel with a cleaner solution, PLAS-STICK® 2320 plastic cleaner. Coating compositions A-K were then applied to each panel with a bird type applicator having a 0.254 mm (0.010 inch) clearance. The panels were then flashed for 30 minutes and baked in an oven at 82°C (180°F) for 30 minutes. After the panels had cooled for one hour, the coating was tested for X-hatch and cross hatch adhesion. A second set of panels was prepared using the same procedure, except that the panels were baked in an oven at 60°C (140°F) for 30 minutes. The results of the tests are shown in table 2.

**TABLE 2**

| Coating Composition | 82°C Bake | | 60°C Bake | |
|---|---|---|---|---|
| | X-Hatch adhesion | Cross-Hatch adhesion | X-Hatch adhesion | Cross-Hatch adhesion |
| A (comparative) | 0 | 0 | 0 | 0 |
| B | 10 | 10 | 10 | 10 |
| C | 10 | 10 | 10 | 5 |
| D | 8 | 10 | 10 | 10 |
| E | 10 | 10 | 10 | 10 |
| F | 10 | 10 | 8 | 10 |
| G | 10 | 10 | 10 | 10 |
| H | 10 | 10 | 10 | 10 |
| I | 10 | 10 | 10 | 10 |
| J | 10 | 10 | 10 | 10 |
| K | 10 | 10 | 10 | 10 |

The foregoing results show that a coating composition having an NCO:OH ratio of 0.5:1 produces a coating that has excellent adhesion to a polyolefin substrate.

### Coating Compositions L-O

The ingredients of Table 3 were mixed in the order shown in a suitable mixing vessel to form coating compositions L-O. All amounts shown are in parts by weight.

**TABLE 3**

| Ingredient | Coating Composition | | | |
|---|---|---|---|---|
| | L | M | N | O |
| Acrylic Blend A | 26.82 | 23.26 | 11.85 | 8.28 |
| Acrylic polyol #1 | 0 | 0 | 17.94 | 17.94 |
| LARAPOL^{®} A81 | 0 | 4.12 | 0 | 4.12 |
| KRASOL^{®} HLBH-P 2000 | 1.46 | 1.46 | 1.46 | 1.46 |
| Dibutyl tin dilaurate | 3.09 | 3.09 | 3.09 | 3.09 |
| Zinc Catalyst | 1.23 | 1.23 | 1.23 | 1.23 |
| Methyl amyl ketone | 5.14 | 4.86 | 3.66 | 3.38 |
| Cyclohexanone | 5.14 | 4.86 | 3.66 | 3.38 |
| DESMODUR® Z-4470 | 7.07 | 7.07 | 7.07 | 7.07 |
| NCO/OH ratio | 0.377 | 0.431 | 0.501 | 0.601 |

Thermoplastic polyolefin panels were prepared by wiping one side of each panel with cleaner solution #1. Coating compositions L-O were then applied to each panel with a bird type applicator having a 0.254 mm (0.010 inch) clearance. The panels were flashed for 30 minutes then baked in an oven at 82°C (180°F) for 30 minutes. After the panels had cooled for one hour, the coating was tested for X-hatch and cross hatch adhesion. A second set of panels was prepared using the same procedure, except that the panels were baked in an oven at 121°C (250°F) for 30 minutes. The results of the tests are shown in table 4.

**TABLE 4**

| Coating Composition | 82°C Bake | | 121°C Bake | |
|---|---|---|---|---|
| | X-hatch adhesion | Cross-hatch adhesion | X-hatch adhesion | Cross-hatch adhesion |
| L | 10 | 10 | 10 | 10 |
| M | 10 | 10 | 10 | 10 |
| N | 10 | 10 | 10 | 10 |
| O | 10 | 10 | 10 | 10 |

These examples show that coating compositions having an NCO:OH ratio from 0.377:1 to 0.601:1 produce a coating that has excellent adhesion to a plastic substrate.

Comparative Coating Composition

The following ingredients were mixed in the order shown to a mixing vessel. All amounts shown are in parts by weight.

| | |
|---|---|
| Acrylic Polyol #1 | 27.46 |
| KRASOL^{®} HLBH-P 3000 | 3.09 |
| Dibutyl tin dilaurate | 3.09 |
| Zinc catalyst | 1.23 |
| Methyl amyl ketone | 3.0 |
| Cyclohexanone | 3.0 |
| DESMODUR^{®} Z-4470 | 9.09 |
| NCO:OH ratio | 1:1 |

Two thermoplastic polyolefin panels were prepared by wiping one side of each panel with PLAS-STICK® 2320 plastic cleaner. The Comparative Coating Composition was then applied to each panel with a bird type applicator having a 0.254 mm (0.010 inch) clearance. One of the panels was flashed for 30 minutes then baked in an oven at 82°C (180°F) for 30 minutes. After the panel had cooled for one hour, the coating was tested for X-hatch and cross hatch adhesion. The second panel was prepared using the same procedure, except that the panel was baked in an oven at 121°C (250°F) for 30 minutes. All tests showed adhesion scores of 10 which is equal to the adhesion scores of the present invention.

## Claims

1. A coating composition comprising
a. a crosslinkable component comprising a crosslinkable polymer having a hydroxyl number from 2 to 200;
b. a saturated hydrocarbon polymer; and
c. a crosslinking component comprising a polyisocyanate having 2 to 10 isocyanate groups per polymer chain;
wherein the ratio of said isocyanate groups to said hydroxy functional groups in the coating composition ranges from to 0.1/1 to 0.75/1 and
wherein the coating composition comprises in the range of from 0.5 weight percent to 4.75 percent by weight of the saturated hydrocarbon polymer, said weight percentages being based on the total weight of said crosslinkable component, said saturated hydrocarbon polymer and said crosslinking component.

2. The coating composition of claim 1 wherein said crosslinkable component is selected from the group consisting of acrylic polyol, polyester polyol, and a combination thereof.

3. The coating composition of claim 1 wherein said saturated hydrocarbon polymer is a telechelic diol.

4. The coating composition of claim 1 wherein said polyisocyanate is selected from the group consisting of cycloaliphatic diisocyanate, the isocyanurate trimer of cycloaliphatic diisocyanate, and a combination thereof.

5. A process of producing an adherent coating on a resinous substrate comprising;
d. applying a layer of the coating composition on said resinous substrate; wherein said coating composition comprises
i. a crosslinkable component comprising a crosslinkable polymer having a hydroxyl number from 2 to 200;
ii. a saturated hydrocarbon polymer; and
iii. a crosslinking component comprising a polyisocyanate having on average 2 to 10 isocyanate groups per polymer chain; and
e. curing said layer to produce said adherent coating on said resinous substrate;
wherein the ratio of said isocyanate groups to said hydroxy functional groups in the coating composition ranges from to 0.1/1 to 0.75/1 and wherein the coating composition comprises in the range of from 0.5 weight percent to 4.75 percent by weight of the saturated hydrocarbon polymer, said weight percentages being based on the total weight of said crosslinkable component, said saturated hydrocarbon polymer and said crosslinking component.

6. The process of claim 5 wherein said resinous substrate is untreated or treated.

7. The process of claim 5 wherein said resinous substrate is made of isotactic polypropylene reinforced with a polyethylene-alphaolefin copolymer, polyamide reinforced with a polyphenyleneether, sheet molding compound or a copolymer of acrylonitrile, butadiene and styrene.

8. The process of claim 5 or 7 wherein said resinous substrate is an autobody part.

## Patentansprüche

1. Beschichtungszusammensetzung umfassend
a. eine vernetzbare Komponente umfassend ein vernetzbares Polymer, das eine Hydroxylzahl von 2 bis 200 aufweist;
b. ein gesättigtes Kohlenwasserstoffpolymer; und
c. eine vernetzende Komponente umfassend ein Polyisocyanat, das 2 bis 10 Isocyanatgruppen pro Polymerkette aufweist;
wobei das Verhältnis der Isocyanatgruppen zu den hydroxyfunktionellen Gruppen in der Beschichtungszusammensetzung im Bereich von 0,1/1 bis 0,75/1 liegt und wobei die Beschichtungszusammensetzung das gesättigte Kohlenwasserstoffpolymer in einer Menge im Bereich von 0,5 Gewichtsprozent bis 4,75 Gewichtsprozent umfasst, wobei die Gewichtsprozentsätze auf das Gesamtgewicht der vernetzbaren Komponente, des gesättigten Kohlenwasserstoffpolymers und der Vernetzungskomponente bezogen sind.

2. Beschichtungszusammensetzung nach Anspruch 1, wobei die vernetzbare Komponente aus der Gruppe ausgewählt ist bestehend aus Acrylpolyol, Polyesterpolyol und einer Kombination derselben.

3. Beschichtungszusammensetzung nach Anspruch 1, wobei das gesättigte Kohlenwasserstoffpolymer ein telechelisches Diol ist.

4. Beschichtungszusammensetzung nach Anspruch 1, wobei das Polyisocyanat aus der Gruppe ausgewählt ist bestehend aus cycloaliphatischem Diisocyanat, dem Isocyanurattrimer von cycloaliphatischem Diisocyanat und einer Kombination derselben.

5. Verfahren zum Herstellen einer Haftbeschichtung auf einem harzigen Substrat, umfassend:
d. das Aufbringen einer Schicht der Beschichtungszusammensetzung auf das harzige Substrat; wobei die Beschichtungszusammensetzung Folgendes umfasst:
i. eine vernetzbare Komponente umfassend ein vernetzbares Polymer, das eine Hydroxylzahl von 2 bis 200 aufweist;
ii. ein gesättigtes Kohlenwasserstoffpolymer; und
iii. eine vernetzende Komponente umfassend ein Polyisocyanat, das 2 bis 10 Isocyanatgruppen pro Polymerkette aufweist; und
e. das Aushärten der Schicht unter Bildung einer anhaftenden Beschichtung auf dem harzigen Substrat;
wobei das Verhältnis der Isocyanatgruppen zu den hydroxyfunktionellen Gruppen in der Beschichtungszusammensetzung im Bereich von 0,1/1 bis 0,75/1 liegt und wobei die Beschichtungszusammensetzung das gesättigte Kohlenwasserstoffpolymer in einer Menge im Bereich von 0,5 Gewichtsprozent bis 4,75 Gewichtsprozent umfasst, wobei die Gewichtsprozentsätze auf das Gesamtgewicht der vernetzbaren Komponente, des gesättigten Kohlenwasserstoffpolymers und der Vernetzungskomponente bezogen sind.

6. Verfahren nach Anspruch 5, wobei das harzige Substrat unbehandelt oder behandelt ist.

7. Verfahren nach Anspruch 5, wobei das harzige Substrat aus mit einem Polyethylen-Alphaolefin-Copolymer verstärktem isotaktischem Polypropylen, mit einem Polyphenylenester verstärktem Polyamid, einer SMC-Harzmatte oder einem Copolymer von Acrylnitril, Butadien und Styrol hergestellt ist.

8. Verfahren nach Anspruch 5 oder 7, wobei das harzige Substrat ein Fahrzeugkarosserieteil ist.

## Revendications

1. Composition de revêtement comprenant:
a. un composant réticulable comprenant un polymère réticulable ayant un indice d'hydroxyle compris entre 2 et 200;
b. un polymère hydrocarboné saturé; et
c. un composant réticulant comprenant un polyisocyanate ayant 2 à 10 groupes isocyanate par chaîne polymère;
dans laquelle le rapport desdits groupes isocyanate auxdits groupes fonctionnels hydroxy dans la composition de revêtement va de 0,1/1 à 0,75/1 et dans laquelle la composition de revêtement comprend entre 0,5% en poids et 4,75% en poids du polymère hydrocarboné saturé, lesdits pourcentages en poids étant rapporté au poids total dudit composant réticulable, dudit polymère hydrocarboné saturé et dudit composant réticulant.

2. Composition de revêtement selon la revendication 1 dans laquelle ledit composant réticulable est choisi dans le groupe constitué d'un polyol acrylique, d'un polyester polyol, et d'une combinaison de ceux-ci.

3. Composition de revêtement selon la revendication 1 dans laquelle ledit polymère hydrocarboné saturé est un diol téléchélique.

4. Composition de revêtement selon la revendication 1 dans laquelle ledit polyisocyanate est choisi dans le groupe constitué d'un diisocyanate cycloaliphatique, du trimère d'isocyanurate d'un diisocyanate cycloaliphatique, et d'une combinaison de ceux-ci.

5. Procédé de production d'un revêtement adhérent sur un substrat résineux consistant à:
d. appliquer une couche de la composition de revêtement sur ledit substrat résineux, ladite composition de revêtement comprenant
i. un composant réticulable comprenant un polymère réticulable ayant un indice d'hydroxyle compris entre 2 et 200;
ii. un polymère hydrocarboné saturé; et
iii. un composant réticulant comprenant un polyisocyanate ayant 2 à 10 groupes isocyanate par chaîne polymère; et
e. durcir ladite couche pour produire ledit revêtement adhérent sur ledit substrat résineux;
dans lequel le rapport desdits groupes isocyanate auxdits groupes fonctionnels hydroxy dans la composition de revêtement va de 0,1/1 à 0,75/1 et dans lequel la composition de revêtement comprend entre 0,5% en poids et 4,75% en poids du polymère hydrocarboné saturé, lesdits pourcentages en poids étant rapporté au poids total dudit composant réticulable, dudit polymère hydrocarboné saturé et dudit composant réticulant.

6. Procédé selon la revendication 5 dans lequel ledit substrat résineux est non traité ou traité.

7. Procédé selon la revendication 5 dans lequel ledit substrat résineux consiste en un polypropylène isotactique renforcé par un copolymère de polyéthylène-alpha-oléfine, un polyamide renforcé par un polyphénylèneéther, un composé de moulage en feuille ou un copolymère d'acrylonitrile, butadiène et styrène.

8. Procédé selon la revendication 5 ou 7 dans lequel ledit substrat résineux est une pièce de carrosserie.
